# EUROPEAN PATENT APPLICATION

(11) **EP 3 670 222 A2**
(43) Date of publication of application: **24.06.2020**
(21) Application number: 19214791.6
(22) Date of filing: 10.12.2019
(51) Int. Cl.: B60J 7/06, B60J 7/11, B60J 7/16

(54) **VEHICLE CANOPY ADAPTER AND CANOPIES**

(30) Priority: 20.12.2018 GB 201820879
(71) Applicant: Mace-NG-Design Ltd, Moreton-In-Marsh, Gloucestershire GL56 0LA (GB)
(72) Inventor: MACE, Stewart, Cheltenham, Gloucestershire GL54 2HY (GB)
(74) Representative: Maidment, Marc

(57) **Abstract**

A vehicle canopy adapter 10 is provided for mounting at least two different types of canopies 110, 600 having different canopy connections to a vehicle 1000 with a cab and an open cargo area. The adapter 10 includes a body 12 for fitting to the cab, and first and second arms 14 which extend from a lower edge of the body to the same side of the body 12 for connection to respective sides of the cargo area. Frame connection areas 18, 20 are provided on the body 12 and also on each arm 14 towards distal ends 14a thereof for receiving a canopy frame 100. Each arm 14 includes a substantially linear rail 16 for receiving a retractable canopy 600, the rails 16 being substantially parallel with each other and extending from a distal end 14a of the respective arm 14 towards the body 12.

## Description

The present invention relates to a vehicle canopy adapter for mounting at least two different types of canopies having different canopy connections to a vehicle with a cab and an open cargo area; and to canopies for mounting on the adapter.

### BACKGROUND TO THE INVENTION

A vehicle such as a pick-up truck typically includes a front cab section for the driver and other occupants, and a rear cargo section. The cargo section may be uncovered or 'open', or may be enclosed by a canopy (also known as a truck cap or truck cover). Various types of canopy are available, including hard-top canopies, soft-top canopies, retractable canopies, fold-up canopies, liftable canopies, and roller canopies or shutters, for example. These types are not necessarily mutually exclusive.

A canopy can be built into a vehicle or retro-fitted. Different canopies are suited for different purposes. Physical modifications to the vehicle, such as drilling holes in different parts of the cargo area, are sometimes needed to fit and secure each type of canopy. Another option to use a number of clamps to secure a canopy to a vehicle. Since there is no single all-purpose canopy that is suitable for every situation, many pick-up truck owners purchase a number of types of canopy. Different canopies do not always share a common set of mounting points or may require different numbers of clamps, so additional mounting arrangements become a requirement. It is also impractical to carry multiple types of canopy in a vehicle due to limited space in the cargo area, and the additional canopies take up significant room in a garage or other storage area.

Fitting a particular canopy typically compromises on functionality or convenience in some way. For example, a one-piece hard-top canopy is more secure than a soft-top canopy, and generally better at protecting cargo from inclement weather. However, a hard-top canopy is also much heavier, and prevents items being loaded into the cargo area from above, as well as precluding loading or transport of items taller than the hard-top. To reduce the likelihood of injury or damaging the canopy, two or more people are needed to mount it to or remove it from a vehicle.

A roller shutter may be easier to pick up and mount without assistance on a vehicle relative to a hard-top, whilst still being lockable to protect cargo, but the height and overall volume of the cargo area is significantly reduced compared to a hard-top. A proportion of the cargo area next to the cab is also taken up by roller shutter mechanism.

Whatever type of canopy is used, removing the canopy takes time and effort, and additional time and effort is required to fit a replacement canopy.

It is an object of the present invention to reduce or substantially obviate the aforementioned problems.

### STATEMENT OF INVENTION

According to a first aspect of the present invention, there is provided a vehicle canopy adapter for mounting at least two different types of canopies having different canopy connections to a vehicle with a cab and an open cargo area, the adapter comprising a body for fitting to the cab, and first and second arms (or elongate members) which extend from a lower edge of the body to the same side of the body for connection to respective sides of the cargo area, in which one or more frame connection areas (such as sockets) are provided near an upper edge of the body and further frame connection areas are provided on each arm towards distal ends thereof, for receiving a canopy frame, and in which each arm includes a substantially linear rail for receiving a retractable canopy, the rails being substantially parallel with each other and extending from a distal end of the respective arm towards the body.

Optional features are presented in the dependent claims.

The adapter can be interpreted as a vehicle canopy receiving unit. An alternate term may be canopy plinth adapter or canopy receiving platform. The adapter allows different types of canopy to be interchangeably mounted to a vehicle quickly and easily, without the need to drill or otherwise modify the vehicle to have multiple sets of holes as mounting points for different canopies. The adapter can be clamped into and remain in place in a cargo area (also known as a truck bed), with the arms along respective sides of the cargo area without taking up substantial room in the cargo area. The adapter will be customised to fit a given vehicle. Since each vehicle model tends to be different, a bespoke adapter can be provided for each model.

The adapter (or its canopy-receiving area/region) may be considered to be 'universal'. That is, whilst bespoke adapter-to-vehicle connections may be provided for a particular vehicle, the adapter may be universal in the sense that it can receive substantially any two or more of the following types of canopy: hard-top canopy, soft-top canopy, retractable canopy, roller shutter canopy, fold-up canopy, liftable canopy, or any other canopy type for a vehicle (particularly a car or pick-up truck); including any combinations and/or variations thereof. For example, a hard-top canopy may have metal grilles at the side(s) for animal transportation. In another example, a hard-top canopy may have aluminium plate (which may be chequered plate) for commercial use. Other variations or sub-types of canopy will be apparent to the skilled person.

It will be appreciated that the canopy dimensions and/or distribution of canopy connection(s) may vary from canopy to canopy. However, the universality of the adapter lies in its capacity to be fitted or secured to any one of a variety of vehicles (preferably selected from pick-up trucks and/or 4x4 vehicles), over or around the cargo area and adjacent to the vehicle cab, with the capability to then receive a canopy selected from any two (or more) different canopy types having different canopy connections. For example, a fixed-point frame for panels, and the slidable/rolling parts of a retractable canopy. A third type of canopy may, if used, be connectable to one of the two existing canopy connections on the adapter, for example.

The one or more frame connection areas on the body may receive substantially horizontal frame bars or beams of a canopy frame. The frame connection area or areas on each arm may receive vertical or slanted legs of a canopy frame.

The term socket should be interpreted to mean a region capable of connecting a frame or portion of a frame. For example, the socket may just be an aperture or recess. Instead of a socket, a frame connection area may include a projection which is insertable into a hollow tube of a frame, for example.

The arms may increase in vertical height where they join to the body. This may provide a hood or hooded region under which a canopy (such as a retractable canopy) can be stored in a retracted configuration.

The positions of the frame connection areas and rails may allow two types of canopy to be mounted at the same time, nested within each other. This allows two canopy types to be transported concurrently.

The vehicle canopy adapter may be retrofitted to a vehicle. The adapter preferably blends in with the contours and/or colour of the vehicle. The adapter is unobtrusive and does not substantially reduce the size of cargo area when no canopy is mounted. Thus it can be left in place on a vehicle even when a canopy is not attached, making it quicker and easier to subsequently mount a canopy on the vehicle. Alternatively, the adapter may be integral to a vehicle.

A second rail may be provided on each arm. The second rail may be adapted to receive a roller shutter or armadillo shutter mechanism. In some cases, the first rail may be suitable to receive that kind of shutter. The adapter may therefore be adapted for receiving at least three types of canopy. In other cases, the first rail may only be suitable for receiving a retractable hood type canopy. The first and/or second rails may extend to the body of the adapter. This allows the roller shutter to cover the full length of the cargo area, and retract as far as possible to maximise the usable volume in the cargo area.

Each rail may extend along its respective arm. Each arm may be open on one side for providing rails. The rails (or open sides of the arms) may face or oppose each other. The rails may be the same length or co-extensive along the respective arms. Inner ends of the rails may terminate at positions which are spaced from the adapter body. The gap (measured perpendicular to the adapter body) may substantially correspond to a length of a retractable canopy along the vehicle when the canopy is in a stowed configuration.

The region where the arms meet the body may form an external corner for fitting to a corresponding corner region provided between the cab and side walls of the cargo area. The body may be considered to include or provide front bulkhead (or body with a sealing panel) which fits against the back of the vehicle cab. It effectively serves as one side of a canopy when a canopy is attached. The bulkhead is adapted to seal the cargo area against the ingress of water.

The distal end of each arm may include an end which curves into a projection. An auxiliary frame connection area or recess may be provided on each arm, optionally on the projection. The projections on each arm may extend towards each other for fitting either side of a tailgate.

This allows a static rear arch to be fitted to the adapter, for use with a retractable canopy. This in turn allows the retractable canopy to fully cover the cargo area, when fully extended. Having the connection areas inset from the arms means that the rear arch is aligned with other arches in the retractable canopy.

A window may be provided through the body. The window may be transparent or translucent. A shutter or other openable/closable mechanism such as a door or blind may be provided to cover or close the window. The frame connection areas on the body may be spaced apart. The frame connection areas on the body may be provided to either side of the window, preferably above the window. This avoids obstructing the rear-view mirror of a vehicle when a frame is provided on the adapter.

A seal may be provided on the adapter. The seal may be disposed along the base of each arm for providing a watertight connection to the vehicle. A seal may also be disposed on the base of the body of the adapter. Preferably the seal comprises neoprene or silicon. More preferably, the seal includes a neoprene sponge. This is both waterproof and resistant to weathering, and provides good sound insulation. A continuous seal may extend along one arm, under the body, and along the other arm. Alternatively, separate seals may be provided on the arms and body, which are compressible to abut each other when fitted to a vehicle.

If a seal is provided, the edge of the seal may be inset from the external side face of the host arm. This provides a recess adjacent to the seal, beneath the base of the arm, when the adapter is mounted to a vehicle, into which a panel edge or edge region can be received to provide a flush appearance of that panel against the vehicle bodywork. If a canvas canopy is used, an elastic waistband or similar may fit into the same recess. In some cases, a recess may be provided along an external edge of each arm. For example, an outward-facing section of each arm may be recessed for receiving an edge of a panel. The recess or channel may extend along each arm. In some embodiments, the recess may be inset from an outer edge of the base of the host arm. The recess is preferably elongate for receiving a corresponding elongate lip on a panel from a modular panelled canopy. This helps to secure the panel in place and provide improved sealing. It also helps the panels to appear to blend into existing contours on a vehicle, when the adapter and panel(s) are fitted to the vehicle, which is aesthetically pleasing and can disguise the fact that the canopy is modular (when all panels are fitted).

One or more connectors may be provided on the opposite face of the body to the arms for releasably connecting the retractable canopy to the adapter. In other words, the arms may extend to one side of the plane of the body, and on the other side of that plane connectors are provided. The connectors may be press studs.

Corresponding connectors or studs may be provided on the cover of a retractable canopy. The body of the adapter may include a rebate adjacent to the connectors for receiving an edge of the cover to improve sealing and overall appearance. The rebate may also or alternately be suitable for receiving a lip on one or more panels of a modular panelled canopy. This provides similar sealing and aesthetic benefits. For example, edges of roof and side panels may hook into the rebate. A P-seal arrangement may be provided for one or more of the panels in the rebate to provide a waterproof seal.

The body may include one or more protrusions and/or apertures. The protrusions and/or apertures provide one half of a locating means for correctly aligning a panel with the body. The protrusions or apertures may be disposed above the window for positioning a roof panel having a complementary set of apertures and/or protrusions to co-operate with those on the body.

Each frame connection area may include a socket for receiving a tube. Covers may be provided for the sockets for when the vehicle is used with the adapter in place but without a canopy on the adapter. Rail covers or protectors may be provided for protecting the rails of each arm when a canopy is not connected.

The body may be substantially rectangular or trapezoidal. This allows it to fit neatly to the cab of the vehicle.

The arms are integrally formed with the body. This makes it easier to mount the adapter to the cargo area.

According to a second aspect of the present invention, there is provided a modular panelled canopy for a vehicle with a cab and an open cargo area, the modular canopy comprising a frame including an arch and a pair of arms extending from the arch, free ends of the arch and each arm being adapted for connection to the vehicle or a vehicle canopy adapter, and a plurality of discrete rigid panels fittable together on the frame, including a roof panel connectable across the pair of arms, a first side panel connectable to the arch and one of the arms, a second side panel connectable to the arch and the other of the arms, and a rear panel connectable to the arch, each panel including connection means to releasably connect that panel to the frame independently of the other panels.

Optional features are presented in the dependent claims.

The modularity makes it facile for an individual to attach or detach the canopy without assistance, because the weight of each piece is manageable alone. It also provides a vehicle canopy which is adaptable according to a variety of use cases. For example, the rear and/or roof panels may be detached, leaving just the side panels, to accommodate long and/or tall loads being transported in the cargo area. Alternatively the side panels may be detached, leaving the roof and rear panels in place on the frame. This may be preferred to better aerate the cargo area. Only one of the panels may be attached in some cases, for example the roof panel. It is also envisaged that three of the four panels may be attached in some cases. Thus, providing a modular canopy with a frame enables any permutation of the panels to be attached to customise the canopy as desired. The frame may also be disassembled for storage in a more compact form.

The panels each connect to the frame. Preferably, panel-panel connectors are provided to secure a given panel to its adjacent panels. Each side panel may include a connector, with a complementary connector on the rear panel. The connectors may include a screw and aperture system for easily tightening and releasing the panel-panel connection. Connectors on the roof panel may fit into complementary connectors on the rear panel (ideally a pin-aperture system for the roof panel connection). The side panels and roof panel may have complementary connectors.

The frame may be bolted into the adapter. This provides some flexibility in the adapter-frame connection during installation.

A bottom edge of each side panel may include a lip (for example, formed by a 90 degree turn) for fitting into a recess in or adjacent to a vehicle canopy adapter. Similar lips may be provided on a side edge of each side panel. This can fit into a rebate in the body of the vehicle canopy adapter. This optimises panel sealing and appearance on a vehicle as discussed for the first aspect of the invention. The roof panel may include a lip for fitting into the rebate for similar reasons.

The roof and/or side panels may each include one or more protrusions or apertures. The protrusions or apertures may serve as locating means for co-operating with corresponding apertures or protrusions on a vehicle or vehicle canopy adapter.

The panels may include complementary parts or structures which abut or engage to provide a watertight seal or a conduit when the panels are connected together.

Each connection means may include at least one cam lock. The or each cam lock may be engageable around the arch or one of the arms. Alternatively, C-clamps or over-centre clamps may be provided for the same purpose. This allows the panels to be securely mounted to the arch and/or arms.

The frame may be an 'A' frame. The arch may be structured as a roll hoop. The arch and arms may be bolted together to form the frame. This means that they can be disassembled for easier storage and transport. The frame may be made of steel (preferably chrome steel or stainless steel), aluminium or carbon fibre, for example. The frame may be powder-coated for durability or to customise colour.

One or both side panels may include a recess or boss. A complementary pin or other protrusion may be provided on the side of the vehicle canopy adapter for receiving the recess. Preferably a pair of recesses and pins are provided. It will be appreciated that one or more pins may be provided on the panels and one or more corresponding recesses on the adapter. This allows the side panel to be easily and correctly positioned when fitting to the frame. A lead chamfer may allow the side panel to be fitted more easily by facilitating initial rotation of the panel into place, for example when locating over-centre clamps onto the arm of the frame. If two pins/recesses are used, one of the recesses (for example the rearmost recess) may include a slot to provide tolerance for fitting the panel.

The rear panel may include one or more lights, such as a brake light. When the panel is fitted to a vehicle, complementary connectors on the panel and vehicle or canopy adapter may provide power to the light(s). The rear panel may include a spoiler or wing. One or more of the panels may include a window. One or more of the panels may include a hinged window. A watertight seal may be provided for each hinged window.

The connection means on each panel may include a seal for preventing ingress of water into or through the canopy. The connection means may include at least one channel or gutter for allowing egress of water from the canopy. A lip may be provided on each side of the roof panel, and each lip may fit into a channel on the side or rear panels respectively. The channels may be U-shaped. The channels may extend along the length of each side. This allows the roof panel to provide a watertight seal when connected to the frame with the other panels. Sides of the rear and/or side panels may include further channels or gutters for draining water from a base region of the canopy.

According to a third aspect of the present invention, there is provided a kit of rigid panels for providing a modular canopy on a vehicle with a frame over a cargo area, the kit comprising a roof panel, first and second side panels fittable to the frame on either side of the roof panel, and a rear panel fittable next to each of the side panels and roof panel, each panel including frame connection means for releasably connecting that panel to the frame independently of the other panels.

This allows an existing frame, such as a roll-cage, over a vehicle cargo area to be adapted into a canopy. Preferably the kit of panels is suitable for providing a modular panelled canopy according to the second aspect of the invention. The kit may include any feature or combination of features presented with respect to the second aspect of the invention.

According to a fourth aspect of the present invention, there is provided a rolling or sliding unit for running along a linear track, the unit comprising a body including a receiving area for a leg of an arch of a retractable canopy, a support extending from the body and including a load-bearing roller or slider mounted to one side of the support for engagement in the track, and first and second stabilisers provided on opposing sides of the roller or slider, each stabiliser including an auxiliary roller or slider mounted on one side of the stabiliser to keep the body substantially upright relative to the track during use.

This allows stable deployment and retraction of a moveable canopy along an axis. The stabilisers prevent the support arch from tipping over relative to the vehicle on which the canopy is mounted, whether during deployment or retraction, or whilst deployed with the vehicle in motion for example. It also obviates the need for additional support structures to keep the retractable canopy in an extended configuration during transit, maximising the volume available in a cargo area of a vehicle.

The stabilisers may lie above the track and only engage the upper surface of the track if the support arch is angled away from the vertical. This reduces friction with the track and enables smoother movement of the retractable canopy. There is no need for a second rail to receive an auxiliary roller or slider with this unit.

The load-bearing and auxiliary rollers or sliders may extend to the same side of the body. The load-bearing roller or slider may include a groove for fitting to a track, such as a rail on an arm of a vehicle canopy adapter. Preferably the load-bearing roller or slider is circular with a circumferential groove to engage upper and lower parts of the track or rail. The cross-section of the groove may be U-shaped. The auxiliary rollers or sliders may be substantially disc-shaped.

According to a fifth aspect of the present invention, there is provided a retractable canopy for a vehicle with a cab and an open cargo area, the retractable canopy being moveable between a stowed configuration at one end of the cargo area and a deployed configuration extending at least partly over the cargo area, the retractable canopy comprising a plurality of arches for connection to a vehicle or a vehicle canopy adapter, each arch including first and second legs and a cross-beam between the legs, and a flexible cover fittable over the arches for covering the cargo area, in which each leg of at least one arch includes a rolling or sliding unit according to the fourth aspect of the invention to enable rolling or sliding in a direction perpendicular to a plane through the arch.

The canopy forms a hood over the cargo area when deployed. This can be more convenient than using a static canopy, because it can be quickly deployed or stowed and so allows the cargo area to be used in open or covered configurations more easily. Using the rolling/sliding units means that the arches remain upright whilst being moved, or whilst deployed and in transit.

The retractable canopy may include any feature or combination of features presented with respect to the fourth aspect of the invention.

The plurality of arches may include a static arch and a set of moveable arches, which can be deployed towards the static arch or retracted in a direction away from the static arch. The static arch may be mounted towards the rear of the cargo area of a vehicle. Preferably each moveable arch includes a pair of rolling or sliding units. The cover can be fitted over the static arch at the rear to keep it taut during transit.

A plurality of connectors may be provided for securing the cover in place over the arches. For example, snap fasteners or press studs may be disposed along the edges of the cover and along the vehicle canopy adapter in complementary positions. Snap fasteners or press studs may be provided on the cab-end of the cover, with complementary parts on the cab-facing part of the adapter. This secures the end of the cover adjacent to the vehicle cab.

If the cover includes a stretchable cord for tensioning the cover sides, then this can be hooked onto corresponding hooks mounted to the adapter or vehicle. The adapter arms may include a recess or rebate into which edges of the cover can be tucked to improve sealing.

Instead of hooks, the retractable canopy may include a cover tensioning mechanism which includes a bar connected to (or connectable to) two or more of the arches. This avoids the need to manually attach the cover to each of the hooks.

Preferably the bar connects to all of the moveable arches to provide longitudinal stability during transit. The bar may connect to the cross-beams of the arches. The bar may be fittable to the arches once they have been moved into the deployed configuration. Alternatively, the bar may be telescopic and remain connected to the arches (and optionally to the vehicle or adapter) whilst the canopy is mounted to the vehicle. In that case, locks may be provided between adjacent telescopic sections to keep the bar extended whilst the canopy is deployed.

Additional bars may connect to the legs of the arches to provide additional support. These bars limit movement of the rolling or sliding unit(s) on respective sides in a direction perpendicular to the track. This reduces the likelihood of bumps or jolts in transit for damaging the retraction mechanism. The additional bars also limit the extent to which the canopy can be deployed. The additional bars may have a vertical height sufficient to cover the rails (of the adapter) from the side when connected to the arches.

The additional bars are releasably attached to the arches. Each bar includes a plurality of resilient clips engageable about the moveable arches. The clips are spaced along the bar. The spacing corresponds to the expected spacing between the arches when the retractable canopy is in a fully deployed state covering the cargo area.

Starting from the canopy being in a retracted position, the arches can be deployed by connecting an end clip to the rearmost moveable arch (that is, the arch closest to the rear of the vehicle, assuming that the static rear arch is not yet installed). The user can then walk backwards with both bars to pull the canopy out. When deployed, the bars may be disconnected. The bars are rotated 180 degrees (about an axis running horizontally between the adapter arms) so that the bars will overlie the cargo area. The end clips of the bars may then be re-connected to the rearmost arch. An equivalent step would be to rotate each bar 180 degrees about its longitudinal axis and swap the bars onto opposing legs of the arch. The clips are thus connected in an upside orientation compared to the previous orientation. Alternatively, the bars are kept attached and rotated about the respective arches the clips are connected to. The bars can initially be outside the arch, and once rotated can lie inside the arch. Clips may be provided on both sides of the bars. The bars are then rotated further about the respective legs to clip the remaining clips onto the other legs of the other arches. There is some vertical play in the clips to allow crossover of the bars. The motion is similar to that a rower with two oars might make. The connection of the other clips may require some manual force to tension the canopy (e.g. if an elastic connector, described below, is connected to adjacent arches). Reverse operations of all stages are performed to stow the canopy.

The same process can be thought of as follows. Gripping the tensioner bars (or rods/arms), the user can walk backwards away from the vehicle to deploy the canopy to the extent they desire. Having deployed the canopy to the desired extent, the user can simply rotate or pivot the tensioner rod about the rear arch. The rods can cross over each over like the rowing technique to have the previous rearmost part of the rod now at a forward position inside the cargo area. The user can then push back on the last arch that resides in the rail (against the residual force of the elastic straps, if provided - see below). This is followed by connecting the tensioner bar to individual arches. The forward part of the bar can then be fixed to a cleat at the forward bulkhead. The rearmost arch can then be attached in a static position over the tailgate. A roof tensioner is then installed which connects the arches together and reacts against the forward bulkhead. When the canopy is stowed at the front bulkhead, the tensioner bar is stored in a bag in the cargo area under a ledge. This bag also stows the track covers/protectors when the canopy is not deployed.

An elastic cord or connector may be provided to link the arches together. Ideally, such connectors are provided on both side of the arch. This biases the arches to a retracted configuration when not fixed into a deployed position, for example by tension bars. The advantage to doing so is that the movement of the arches and corresponding rollers is synchronised for retraction, and that the arches stay upright. On initially releasing the bars from all but one arch on each side, the elastic connector immediately causes the canopy to retract slightly.

Each leg of the arch may include a groove. The groove may connect to or about a detent in the socket of each roller. This provides a limited degree of freedom of movement for the leg, so that it can rotate relative to the socket. This in turn helps to reduce the likelihood of the canopy undergoing 'crabbing' when being stowed or deployed.

The retractable canopy may be small enough to be retracted and remain on the adapter whilst a modular panelled canopy is mounted on the same adapter. The modular panelled canopy therefore fits over or around the retracted canopy, which avoids needing to detach most or all of the retractable canopy and store it elsewhere. This would be concurrent mounting If provided, the static arch may need to be detached to provide room for the rear panel to attach.

The retractable canopy is preferably modular. The cover can be detached from the arches. The tensioning bar or bars can be removed. The static rear arch (if provided) can be removed. The rolling or sliding units can be removed from the arch(es).

A secondary cover or shroud may be provided for protecting the main cover when retracted, as well as disguising for aesthetic reasons. The secondary cover may be connectable to the same fasteners on the adapter as the main cover. The secondary cover may be made of the same material as the main cover. The secondary cover may provide a façade, and may be coloured to match the vehicle bodywork to disguise its presence. The cover may be a glass-reinforced plastic cover. It may connect to the inside face of the body of the adapter via press connectors, for example.

The retractable canopy may be retractable behind side walls of the adapter. This may be provided by the region where the arms connect to the adapter. This can provide a hood under which the retractable canopy can be stored.

According to a sixth aspect of the present invention, there is provided a retractable canopy for a vehicle with a cab and an open cargo area, the retractable canopy being moveable between a stowed configuration at one end of the cargo area and a deployed configuration extending at least partly over the cargo area, the retractable canopy comprising a plurality of arches for connection to a vehicle or a vehicle canopy adapter, each arch including first and second legs and a cross-beam between the legs; a flexible cover fittable over the arches for covering the cargo area; and a cover tensioning mechanism connected to at least two (preferably at least three) of the arches to keep the flexible cover substantially taut when in the deployed configuration.

The advantages of the retractable canopy and of the cover tensioning mechanism are discussed with respect to corresponding features in the fifth aspect of the invention. The retractable canopy may include any feature or combination of features presented with respect to the fourth or fifth aspects of the invention.

According to a seventh aspect of the present invention, there is provided a kit comprising a vehicle canopy adapter according to the first aspect of the invention, and at least one canopy including canopy connection means engageable with the frame connection areas or rails.

A first canopy may be provided and may include canopy connection means engageable with the frame connection areas or rails. A retractable second canopy may be provided and may include canopy connection means engageable with the rails. The first canopy may be a modular panelled canopy according to the second aspect of the invention. The second canopy may be a retractable canopy according to the fifth or sixth aspects of the invention. The kit may comprise fixing means, such as clamps, for securing the vehicle canopy adapter to a vehicle. The clamps may be G-clamps. The kit may include a frame for connection to the vehicle canopy adapter.

A vehicle including a cab and an open cargo area may be provided, in which the vehicle comprises one or more of: a vehicle canopy adapter according to the first aspect of the invention; a modular panelled canopy according to the second aspect of the invention; a kit according to the third aspect of the invention; one or more rolling or sliding units according to the fourth aspect of the invention; a retractable canopy according to the fifth or sixth aspects of the invention; a kit according to the seventh aspect of the invention.

### BRIEF DESCRIPTION OF THE DRAWINGS

For a better understanding of the present invention, and to show more clearly how it may be carried into effect, reference will now be made by way of example only to the accompanying drawings, in which:
Figure 1 shows a perspective view of a vehicle canopy adapter and a frame connected to the adapter;
Figure 2 shows an exploded perspective view of a modular panelled canopy including side panels, a rear panel and a roof panel with the vehicle canopy adapter and frame of Figure 1;
Figure 3 shows a perspective view of different side panels for the canopy in Figure 2;
Figure 4 shows another perspective view of a side panel being fitted to or removed from the modular panelled canopy of Figure 2;
Figure 5 shows a perspective view of a clamp on the one of the side panels in Figure 2;
Figure 6 shows an enlarged partial view of a sealing mechanism between the roof panel and side panel of Figure 2;
Figure 7A shows a side view of the inside of a side panel for the modular panelled canopy of Figure 2;
Figure 7B shows a side view of a locating pin for the vehicle canopy adapter of Figure 1, for receiving the side panel of Figure 7A;
Figure 8A shows a perspective view of a rear panel for the modular panelled canopy of Figure 2;
Figure 8B shows a side perspective view of the rear panel of Figure 8A;
Figure 9A shows a perspective view of a retractable canopy on a vehicle canopy adapter, mounted on a vehicle;
Figure 9B shows a perspective view of the retractable canopy of Figure 9A including a cover in a deployed configuration;
Figure 9C shows another perspective view of the retractable canopy of Figure 9A;
Figure 9D shows a perspective view of the retractable canopy of Figure 9B in a retracted configuration;
Figure 10 shows a perspective view of an arm of the vehicle canopy adapter in Figure 9A;
Figure 11A shows a perspective view of a roller of the retractable canopy of Figure 9A;
Figure 11B shows a front perspective view of a second roller for the retractable canopy of Figure 9A;
Figure 11C shows a rear perspective view of the roller of Figure 11B;
Figure 12 shows an enlarged partial view of a tensioning system of the retractable canopy of Figure 9A;
Figure 13 shows a perspective view of part of a front face of a vehicle canopy adapter;
Figure 14 shows a perspective view of another embodiment of a side panel for the modular panelled canopy of Figure 2; and
Figure 15 shows a perspective view of another embodiment of a rear panel for the modular panelled canopy of Figure 2.

### DESCRIPTION OF PREFERRED EMBODIMENTS

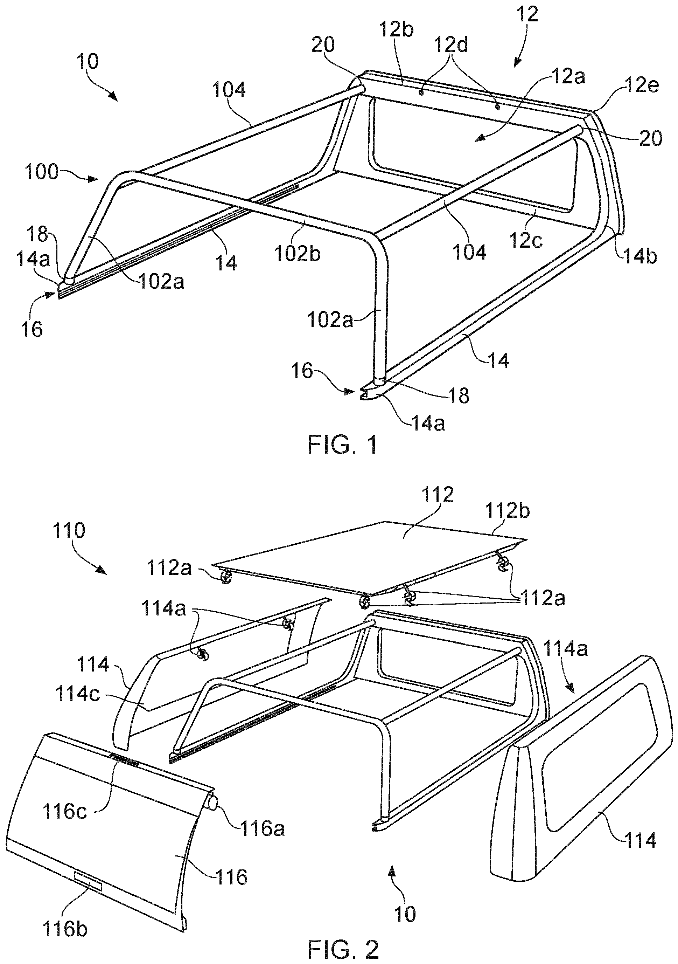

Figure 1 shows a vehicle canopy adapter, indicated generally at 10. The adapter 10 is designed to fit to a cargo area of a vehicle, behind a vehicle cab. The vehicle is preferably a pick-up truck. The adapter 10 includes a body portion 12 with a window 12a. The window 12a is a rectangular aperture with rounded corners in this embodiment. The window 12a is at least as large as the corresponding rear window on a cab of a vehicle (not shown) to which the adapter 10 will be mounted. Upper and lower bars 12b, 12c are provided above and below the window 12a.

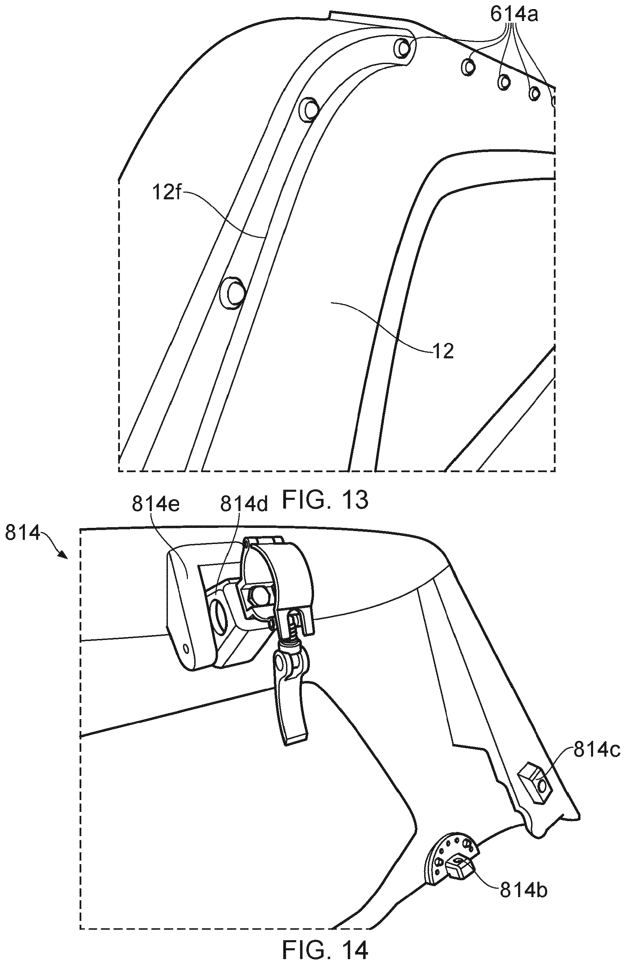

The adapter 10 is substantially symmetrical about a vertical plane bisecting the body 12. The profile of the body portion 12 has a substantially trapezoidal perimeter for fitting neatly to the cab. It will be appreciated that the shape of the adapter 12 will ideally be selected according to the shape of the vehicle the adapter 10 is intended for. A lip 12e is provided around the perimeter. A rebate 12f (seen in Figure 13) is provided on the other side of the body portion. That is, the rebate 12f faces onto the cab of a vehicle when the adapter is mounted on a vehicle.

Two arms 14 extend from the body portion 12. The arms 14 are integrally formed with the body 12 in this embodiment. The arms 14 widen at points 14b as they transition into the body 12. The arms 14 extend to the same side of the body 12 for connection to respective sides of a cargo area (not shown) of the vehicle, behind the cab. The arms 14 are substantially parallel to each other.

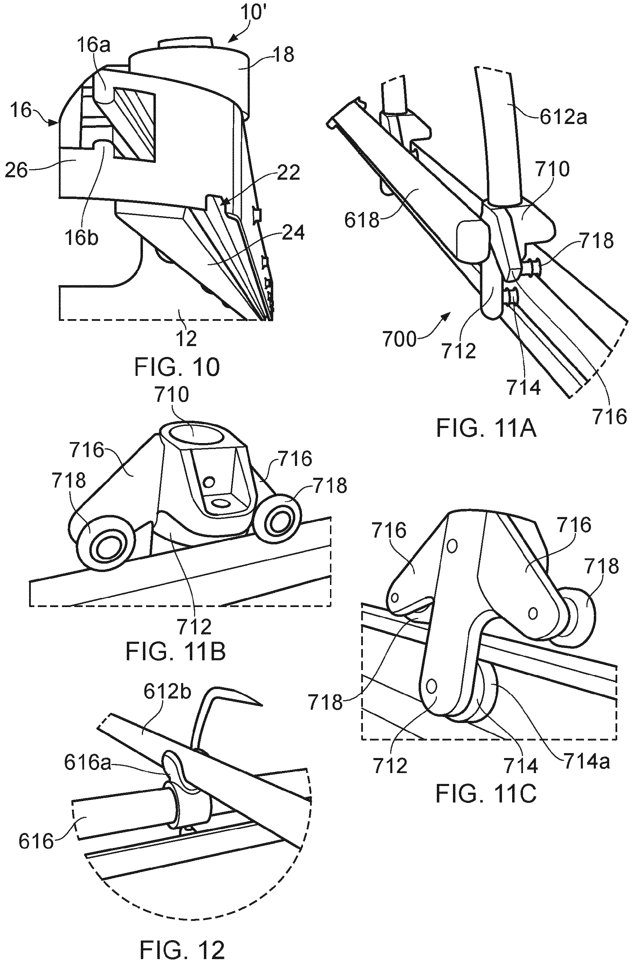

Each arm 14 includes substantially parallel inner and outer side surfaces. The outer side surface curves inwardly at a distal end 14a of each arm 14. Each arm 14 includes a rail, indicated generally at 16. In some embodiments the rails 16 may be formed by extrusion. The rails 16 are parallel with each other. The rails 16 are discussed in more detail below in relation to Figure 10.

A pair of sockets 18 are provided facing upwards, near the distal ends 14a of each arm 14. The sockets 18 are inset from the curved portions of the distal ends 14a. A further pair of sockets 20 is provided on the body 12. The sockets 20 are provided on either side of the window 12a, and above the top edge of the window 12a.

A frame 100 is provided in engagement with the adapter 10. The frame 100 is provided to support a modular panelled canopy, indicated at 110 in Figure 2. The frame 100 includes a rear arch with two legs 102a receivable in each socket 18 and connected by a cross-beam 102b. The rear arch slopes slightly towards the body 12 in this embodiment. The frame 100 also includes two beams 104 connected to the rear arch. In this embodiment, the beams 104 bolted in place. This makes it easier to assemble and disassemble the frame 100. The beams 104 extend into the sockets 20 on the body 12 of the adapter 10.

Figure 2 shows a plurality of rigid panels which can be connected to the frame 100. Each panel is discrete from the other panels. That is, each panel is independently connectable to the frame 100. The panels are made of glass fibre reinforced plastic (GFRP) in this embodiment, but any suitable material may be used.

A roof panel (or top panel) 112 is connectable across the beams. Connectors or clamps 112a are provided so that the roof panel 112 can be connected to each of the beams and to the rear arch. Two clamps 112a are provided adjacent to the side edges and rear edge of the panel 112. Four of the six clamps 112a are visible in Figure 2. In some embodiments, the roof panel does not include rear clamps, and is only securable to the two beams of the frame, not the rear arch. The body 12 includes a pair of apertures 12d for receiving pins (not shown) adjacent to the front edge 112b of the roof panel 112.

First and second side panels 114 are provided. The panels 114 are substantially identical to each other, except that they are the mirror image of each other. Each panel 114 includes connectors or clamps 114 near the top edge of the panel for connection to the corresponding beam 104. Another connector 114c is provided towards the side edge of the panel 114 to connect to a corresponding connector (not shown) on the rear panel. This provides a panel-to-panel connection for securing the panels to each other. This is in addition to any panel-to-frame connectors or clamps. The connectors are in complementary positions that either line up for connection when the panels are mounted in place, or are close enough to be linked together by a third member, such as a screw.

A rear panel 116 is also provided. The rear panel 116 includes connectors or clamps 116a which connect to the rear arch. A pair of the clamps 116a connects to the cross-beam 102b. A handle 116b is provided for opening the rear panel in a conventional manner (opening mechanism not shown). A tail light 116c is provided along the top edge of the panel 116. Suitable electrical wiring and connections are provided in the panel so that, when the panel 116 is fitted on a vehicle, the tail light 116c receives power from the vehicle.

Panel-panel connectors can be provided between the other side panel and the rear panel. One or more pins or other connectors (not shown) can be provided on the rear edge of the roof panel for insertion into corresponding apertures in the rear panel.

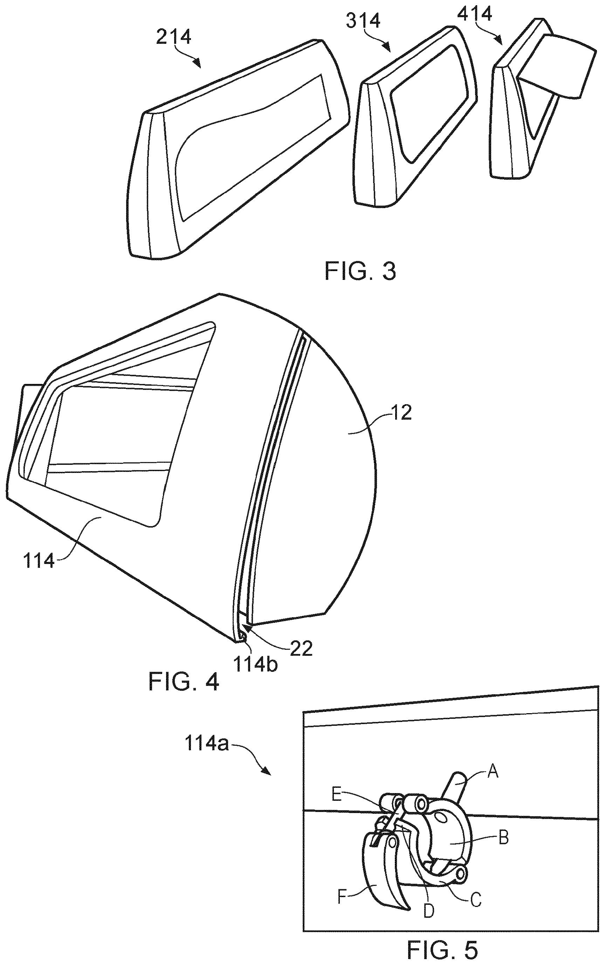

Figure 3 illustrates different options for side panels for the modular canopy. Side panel 214 does not include a window. Side panel 314 includes a window. Side panel 414 includes a hinged window or panel. The mechanism for moving the window is not illustrated, but can include a piston arrangement disposed to either side of the window.

Figure 4 shows side panel 114 adjacent to the adapter 10. The side panel 114 includes an upturned lip 114b along its lower edge, which faces towards the frame 100. A corresponding elongate recess 22 (see Figure 10) is provided under each arm 14 of the adapter 10. The lip 114b hooks into the recess 22 to improve sealing and panel fit.

Figure 5 shows one of the clamps 114a in detail. The clamp 114a includes a rod (A) fitted to the panel 114. In preferred embodiments, a more robust connector than the rod (A) is used. Two halves (B, C) of a jaw are hingedly connected together, with part (B) being connected to the rod (A). The distal end of part (C) includes a notched section (D). A closure mechanism is provided, including a bridging member (E) connected to the distal end of part (B) and sized to fit into the notched section (D). A lever (F) is connected to the other end of the bridging member (E), and used to secure the jaw around the rear arch or beam of the frame 100. Other designs of clamp may be used in other embodiments.

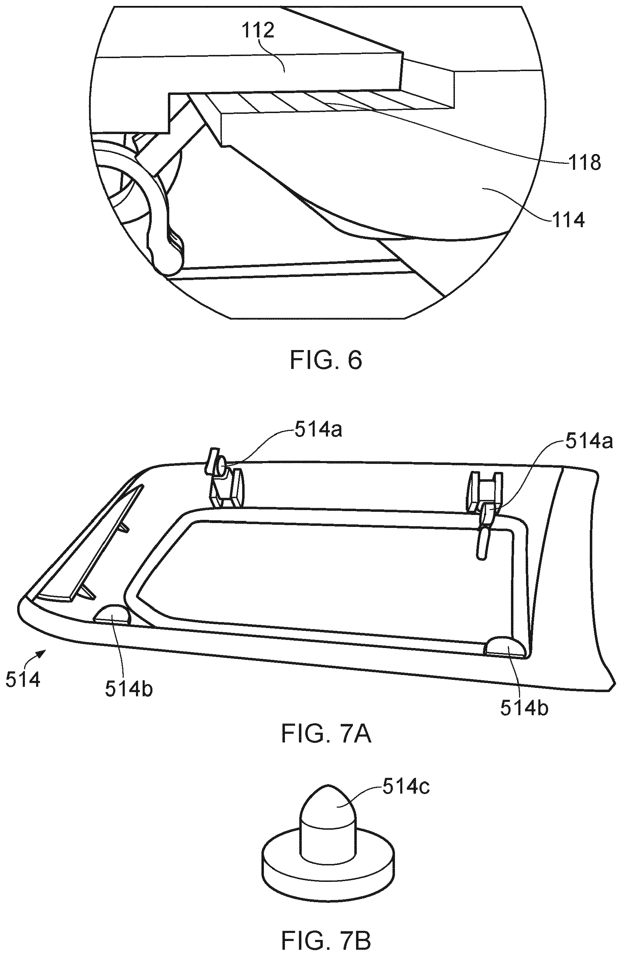

Figure 6 shows the edge of the roof panel 112 in proximity to one of the side panels 114. The side edge of the roof panel 112 effectively forms an overhang which fits into a corresponding section of the top edge of the side panel 114. This manner of interlocking or engaging the panels 112, 114 provides a lip and channel system, providing a seal against the ingress of water. A rubber seal or similar may be provided on one or both interlocking sections to enhance the seal. In some embodiments, a gutter (which is preferably U-shaped) may be provided to allow drainage, in case water enters the join 118. The water ideally runs along the gutter and drains out of the rear of the canopy. In some embodiments, the sealing arrangement may include a P-seal.

Figure 7A shows another embodiment of a side panel 514. Over-centre clamps 514a are provided above the windowed portion of the panel 514. A pair of panel-locating bosses 514b are spaced apart to either end of the lower edge of the window. Figure 7B shows a complementary connector 514c with a locating pin receivable in one of the bosses 514b. A pair of the connectors 514c can be mounted on the arms 14 of the vehicle canopy adapter 10, spaced apart by the same distance as the bosses. The locating pins can be locked in place in some embodiments, to provide enhanced security.

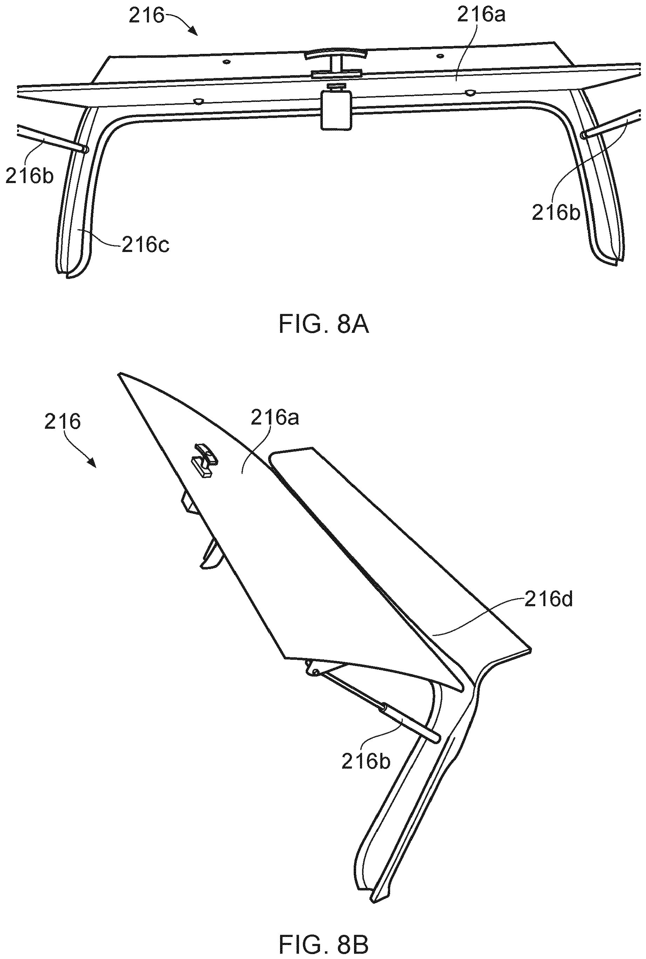

Figures 8A and 8B show another embodiment of a rear panel 216. The panel 216 includes a hinged window 216a, with a pair of piston arms mounted to either side of the panel 216 for opening and closing the window 216a. A peripheral seal 216c is provided around rear face of the panel 216. A top edge 216d of the panel 216 extends rearwards to form a spoiler. Clamps (not shown) are again provided to connect the panel 216 to the frame 100.

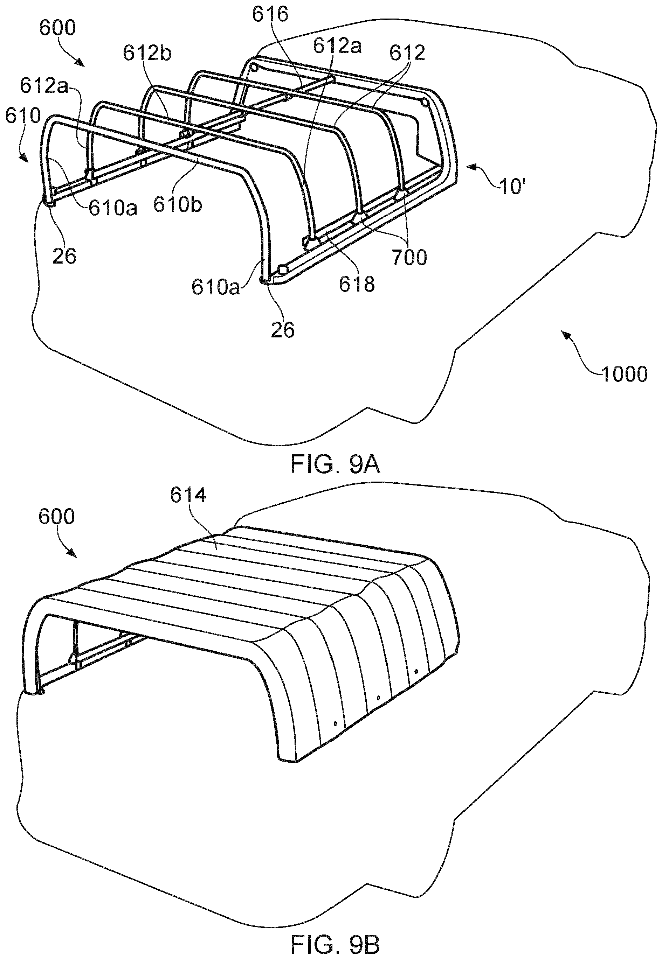

Figures 9A to 9D illustrate a retractable canopy, indicated generally at 600, which can be attached to a vehicle 1000. The canopy 600 is fitted to a modified version of a vehicle canopy adapter, indicated generally at 10' in Figure 10. The adapter 10' is predominantly the same as the first embodiment, and like reference numerals indicate identical parts unless otherwise indicated.

The canopy 600 includes a fixed rear arch, indicated generally at 610, and a plurality of moveable arches 612. The arches 610, 612 are hollow to minimise weight. The arches 610, 612 are made of a metallic fabrication in this embodiment. The rear arch 610 includes first and second legs 610a connected by a cross-beam 610b. Each arch is formed as a single piece. Each moveable arch 612 has two legs 612a connected by a cross-beam 612b too. Rolling or sliding units 700 are connected to distal ends of the legs 612a of each moveable arch 612. The units 700 are discussed in more detail with respect to Figures 11A to 11C.

As shown in Figure 10, the adapter 10' includes a projection 26 on the distal end of each arm 14. Each projection 26 includes a socket 28 for receiving the legs 612a of the rear arch 610. The spacing of the sockets 28 corresponds to the spacing of the distal ends of the legs 610a.

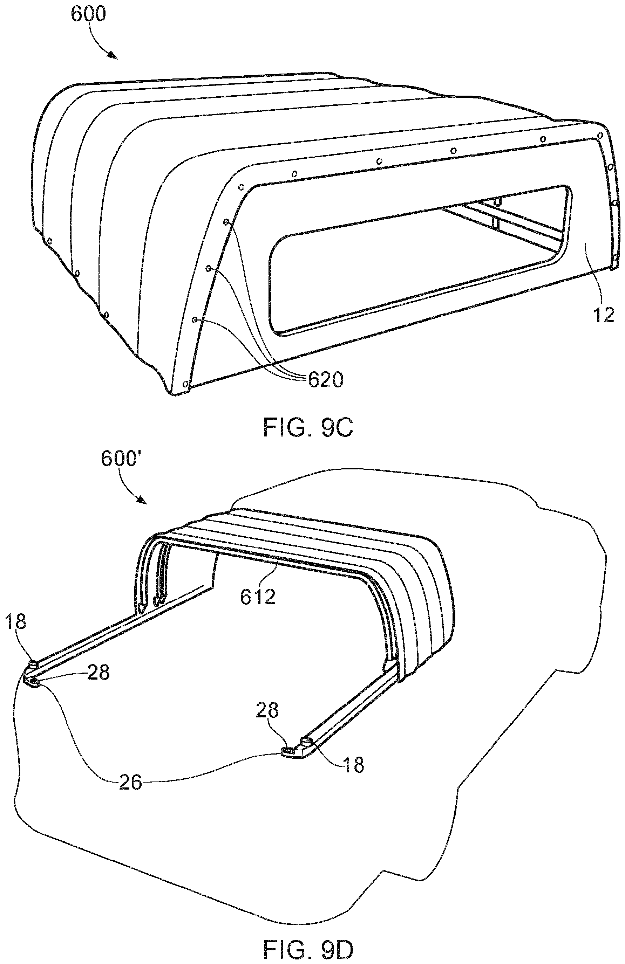

As seen in Figure 9B, a cover 614 is provided to fit over the arches 610, 612. The cover is made of canvas in this embodiment. Press studs 614a are used to connect the sides of the cover 614 to the adapter 10' (equivalent studs 614a can also be seen in Figure 13). Figure 9C shows further press studs (some of which are indicated at 620) are provided at the front end of the cover to secure it to the body 12 of the adapter 10'. An elastic waistband (not shown) is provided in a lower edge or base of the canopy to pull the canopy taut.

Referring again to Figure 9A, a cover tensioning mechanism is provided by a bar 616. The bar 616 is connected across the cross-beams 612b of the moveable arches 612. The bar 616 is provided centrally between the legs 612a. The connection is shown in more detail in Figure 12. A resilient C-shaped clip 616a connected to the bar 616 is clipped about the cross-beam 612a in each case. An end of the bar 616 also fits into a recess in the body of the adapter 10'. When the bar 616 is fitted, the canopy 600 remains in a deployed configuration (Figure 9B) and cannot be retracted until the bar 616 is detached.

Two additional bars 618 are provided connected between the legs 612a on either side of the canopy 600. The bars 618 can also be connected to the adapter 10'.

Figure 9D shows the retractable canopy 600 in a retracted configuration. The static rear arch 610 is not shown. The sockets 28 for the rear arch 610 are set inwards of the adapter arms 14 so that the legs of the fixed arch 610 can be in line with the legs of the moveable arches 612.

Figure 10 shows part of the second embodiment of the adapter 10'. Only one of the arms 14 is shown, but the same features described next are provided for the other arm 14. The adapter 10' include the elongate recess 22 along its base, for receiving a side panel lip. The adapter 10' also includes a seal 24 along the length of the arm 14. The seal 24 is made of neoprene sponge in this embodiment. The rail 16 includes upper and lower elongate protrusions 16a, 16b which together form a linear track or beaded rail for a rolling or sliding unit 700. The end of the rail 16 is open to allow the unit 700 to be easily snapped into the rail, and removed from the rail 16 when switching canopy types. The distal end of the arm 14 curves or extends into the projection 26 as discussed above.

Figures 11A to 11C show a rolling or sliding unit 700 for the retractable canopy 600. The unit 700 includes a body 710 with a leg 712 and two stabilising arms 716 which extend to either side of the leg 712. The unit 700 is arrow-shaped as seen in Figure 11C. A load-bearing member 714 is mounted to the side of a distal end of the leg 712. It has a U-shaped cross-section 714a for engaging the upper and lower elongate protrusions 16a, 16b of the rail 16. Auxiliary members 718 are mounted on the sides of distal ends of the stabilising arms 716, to the same side of the body 712 as the load-bearing member 714. In this embodiment, the members 714, 718 are rollers. However, it will be appreciated that sliding members may be used instead if formed of a material with a suitably low coefficient of friction.

Figure 14 shows another embodiment of a side panel 814. This side panel is similar to the one shown in Figure 7A. For example, a boss 814b like the previous boss 514b is connected towards the lower edge of the panel 814. Each clamp is connected to the internal face of the panel 814 by a mount 814d, which is more robust than the rod A in Figure 5. A recessed area 814e is provided towards the top edge of the panel 814, above the window, for accommodating the mount 814d. A connector 814c is provided at the rear edge of the panel 814 for receiving a corresponding connector from a rear panel, to secure the panels to each other.

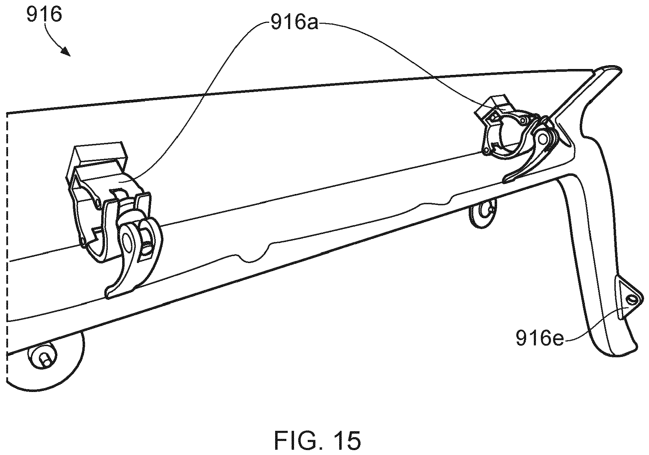

Figure 15 shows another embodiment of a rear panel 916, viewed on its internal face (the one that can connect to a canopy frame). The rear panel has had the window section removed in this embodiment, leaving a beam and which has a pair of legs extending down on either side. Only one of the legs is shown, but it will be appreciated that the arrangement is similar to that of Figure 8A. There are two clamps 916a spaced apart along the upper edge of the beam. A connector 916e is provided on each leg of the rear panel 916. The connector 916e is an apertured bracket which can receive a screw (not shown). A duplicate bracket is provided on the other leg, preferably in a mirror position. The screw can be connected into an aperture in a side panel connector, such as the connector 814c, and be incrementally tightened to secure lower ends of the panels together.

In use, the vehicle canopy adapter 10' is positioned against a vehicle cab with the arms lying along sides of the vehicle cargo area. The arms 14 are clamped in place to secure the adapter 10'. To mount the modular panelled canopy 110, the frame 100 is inserted into the sockets in the adapter, and the individual panels 112, 114, 116 then connected in turn to the frame 100. The reverse operation is performed to remove the canopy 110, in order to instead mount the retractable canopy 600. The retractable canopy can be mounted by connecting a plurality of rolling units 700 into the rails 16 of each arm 14 in the adapter 10'. The arches 610, 612 are already mounted in the adapter 10' and units 700 respectively. The tension bar 616 and side bars 618 can be connected afterwards. The cover 614 is usually fastened over the arches 610, 612 (e.g. via Velcro® ties) before installing the canopy. The reverse operation can performed to remove that canopy 600. Whilst installed, the canopy 600 is linearly moveable between deployed and stowed configurations along the rails 16 of the adapter 10', when the tension bar 616 and side bars 618 do not restrict movement of the arches 612.

The embodiments described above are provided by way of example only, and various changes and modifications will be apparent to persons skilled in the art without departing from the scope of the present invention as defined by the appended claims.

## Claims

1. A vehicle canopy adapter (10) for interchangeably mounting different types of canopies having different canopy connections to a vehicle (1000) with a cab and an open cargo area, the adapter comprising a body (12) for fitting to the cab, and first and second arms (14) integrally formed with the body, the arms extending from a lower edge of the same body (12) to the same side of the body (12) for connection to respective sides of the cargo area, in which frame connection areas (18, 20) are provided near an upper edge of the body and also on an upward-facing portion of each arm (14) towards distal ends (14a) thereof for together receiving a canopy frame (100), and in which each arm includes a substantially linear rail (16) for receiving a retractable canopy, the rails being substantially parallel with each other and extending from a distal end (14a) of the respective arm towards the body (12).

2. A vehicle canopy adapter (10) as claimed in claim 1, in which the distal end (14a) of each arm includes a projection (26) with an auxiliary frame connection area (28), the projections extending towards each other between the arms (14) for fitting on either side of a tailgate.

3. A vehicle canopy adapter (10) as claimed in claim 1 or claim 2, in which the body (12) includes a window (12a), and the frame connection areas (20) on the body are spaced apart above the window and provided to either side of the window.

4. A vehicle canopy adapter (10) as claimed in any preceding claim, in which a seal (24) is provided along the base of each arm (14) for providing a watertight connection to the vehicle.

5. A vehicle canopy adapter (10) as claimed in any preceding claim, in which a recess (22) extends along or is provided adjacent to a lower portion of each arm (14) for receiving an edge of a canopy panel.

6. A vehicle canopy adapter (10) as claimed in claim 5 when dependent on claim 4, in which the recess (22) is provided under the arm (14), adjacent to the seal (24).

7. A vehicle canopy adapter (10) as claimed in any preceding claim, in which the body (12) includes one or more protrusions or apertures (12d) as roof panel locating means above the window for positioning a roof panel.

8. A vehicle canopy adapter (10) as claimed in any preceding claim, in which each frame connection area (20) on the body includes a socket or an aperture configured for receiving a substantially horizontal frame bar or beam (104) of a canopy frame (100), and/or the frame connection areas (18) on the first and second arms (14) each include a socket or an aperture (28) configured for receiving a vertical or slanted leg (102a) of a canopy frame (100).

9. A modular panelled canopy (110) for a vehicle (1000) with a cab and an open cargo area, the modular canopy comprising a frame (100) including an arch (102a, 102b) and a pair of arms (104) extending from the arch, free ends of the arch and each arm being adapted for connection to the vehicle or a vehicle canopy adapter (10), and a plurality of discrete rigid panels (112, 114, 116) fittable together on the frame, including a roof panel (112) connectable across the pair of arms, a first side panel (114) connectable to the arch and one of the arms, a second side panel (114) connectable to the arch and the other of the arms, and a rear panel (116) connectable to the arch, each panel including connection means (112a, 514a, 916a) to releasably connect that panel to the frame independently of the other panels.

10. A modular panelled canopy (110) as claimed in claim 9, in which the panels (112, 114, 116) include complementary parts which engage to provide a watertight seal when the panels are connected to the frame and in abutment with each other.

11. A modular panelled canopy (110) as claimed in claim 9 or 10, in which each connection means (112a, 514a, 916a) includes at least one cam lock engageable around the arch (102a, 102b) or one of the arms (104); and/or the connection means includes a seal for preventing ingress of water, or at least one channel or gutter for allowing egress of water from the canopy.

12. A kit of rigid vehicle panels (112, 114, 116) for providing a modular canopy (110) on a vehicle (1000) with a frame (100) over a cargo area, the kit comprising a roof panel (112), first and second side panels (114) fittable to the frame on either side of the roof panel, and a rear panel (116) fittable next to each of the side panels and roof panel, each panel including frame connection means (112a, 514a, 916a) for releasably connecting that panel to the frame independently of the other panels.

13. A retractable canopy (600) for a vehicle (1000) with a cab and an open cargo area, the retractable canopy being moveable between a stowed configuration at one end of the cargo area and a deployed configuration extending at least partly over the cargo area, the retractable canopy comprising a plurality of arches (610, 612) for connection to a vehicle or a vehicle canopy adapter (10), each arch including first and second legs (610a, 612a) and a cross-beam (610b, 612b) between the legs, and a flexible cover (614) fittable over the arches for covering the cargo area, in which:
a) each leg of at least one arch includes a rolling or sliding unit (700) for running along a linear track to enable rolling or sliding of the arch, the rolling or sliding unit comprising a body (710) including a receiving area for a leg of an arch of a retractable canopy, a support (712) extending from the body and including a load-bearing roller or slider (714) mounted to one side of the support for engagement in the track (16), and first and second stabilisers (716) provided on opposing sides of the load-bearing roller or slider, each stabiliser including an auxiliary roller or slider (718) mounted on one side of the stabiliser to keep the body substantially upright relative to the track during use; and/or
b) a cover tensioning mechanism (616) is connected to the arches to keep the flexible cover substantially taut when in the deployed configuration.

14. A kit comprising a vehicle canopy adapter (10) as claimed in any of claims 1 to 8, and:
a first canopy with a frame or canopy connection means engageable with the frame connection areas or rails of the vehicle canopy adapter, such as a modular panelled canopy (110) as claimed in any of claims 9 to 11; and/or
a retractable second canopy with canopy connection means engageable with the rails, such as a retractable canopy (600) as claimed in claim 13.

15. A vehicle (1000) including a cab and an open cargo area, the vehicle comprising one or more of: a vehicle canopy adapter (10) as claimed in any of claims 1 to 8; a modular panelled canopy (110) as claimed in any of claims 9 to 11; a kit of rigid vehicle panels (112, 114, 116) as claimed in claim 12; a retractable canopy (600) as claimed in claim 13; a kit as claimed in claim 14.
